# FASCICULE DE BREVET EUROPEEN

(11) **EP 1 184 262 B1**
(45) Date de publication et mention de la délivrance du brevet: **14.02.2007**
(21) Numéro de dépôt: 01402170.3
(22) Date de dépôt: 14.08.2001
(51) Int. Cl.: B62D 21/15, B62D 25/08

(54) **Ensemble de structure de caisse comportant des renforts de cloche de suspension**
Aufbaustruktur mit verstärkten Federbeinaufnahmen
Body structure with reinforced suspension domes

(30) Priorité: 29.08.2000 FR 0011046
(43) Date de publication de la demande: 06.03.2002
(73) Titulaire: Renault s.a.s., 92100 Boulogne Billancourt (FR)
(72) Inventeur: Suss, Marc, 92170 Vanves (FR)

(56) Documents cités:
- EP-A- 0 679 564
- EP-A- 0 810 144
- EP-A- 0 990 577
- US-A- 5 417 471
- PATENT ABSTRACTS OF JAPAN vol. 015, no. 065 (M-1082), 15 février 1991 (1991-02-15) & JP 02 293276 A (MAZDA MOTOR CORP), 4 décembre 1990 (1990-12-04)

## Description

L'invention concerne un ensemble de structure de caisse de véhicule automobile.

L'invention concerne plus particulièrement un ensemble de structure de caisse de véhicule automobile, du type qui comporte, d'avant en arrière, un élément de structure de caisse, compressible longitudinalement en cas de choc, qui forme notamment support pour des organes mécaniques du véhicule, et une cellule rigide, qui forme notamment habitacle du véhicule automobile, du type dans lequel un tablier sensiblement vertical qui se prolonge dans sa partie supérieure par un auvent sensiblement horizontal, est interposé entre l'élément de structure de caisse et la cellule, du type dans lequel l'élément de structure de caisse est délimité transversalement par des parois latérales verticales formant support pour des ailes du véhicule, et du type dans lequel l'ensemble de structure de caisse comporte, en arrière et sensiblement à proximité immédiate du tablier, des pieds latéraux verticaux d'articulation d'ouvrants qui sont agencés dans le prolongement des parois, et, en avant et sensiblement à proximité immédiate du tablier, des cloches porteuses d'éléments de suspensions qui sont adjacentes aux faces intérieures des parois.

On connaît de nombreux exemples d'ensembles de structure de caisse de ce type, voir a ce sujet le document EP-A-08/0144, dont la description couvre le préambule de la revendication 1.

Un tel ensemble de structure de caisse comporte généralement au moins une paire d'éléments longitudinaux, par exemple des longerons, qui sont accolés aux parois latérales de l'élément avant, et dont au moins une partie est jointive avec un coin avant des cloches porteuses des éléments de suspension.

De ce fait, lorsqu'un tel ensemble de structure de caisse est soumis à un choc frontal, la déformation en compression des longerons provoque l'entraînement en rotation des cloches porteuses des éléments de suspension qui se déforment en pivotant sur elles-mêmes.

Dans une telle configuration, la déformation des cloches présente de multiples inconvénients.

En premier lieu, la rotation des cloches peut les conduire à déformer les pieds latéraux verticaux d'articulation d'ouvrants de sorte que lesdits ouvrants ne soient plus dans l'alignement longitudinal de la carrosserie du véhicule. De ce fait, lesdits ouvrant ne sont plus susceptibles de s'opposer aux efforts de compression de l'élément avant, ce qui peut provoquer une déformation de la cellule.

En second lieu, la rotation des cloches peut aussi les amener à pénétrer dans la cellule et causer ainsi de graves lésions aux passagers du véhicule.

Pour remédier à ces inconvénients, l'invention propose un ensemble de structure de caisse du type décrit précédemment, comportant des moyens destinés à prévenir une éventuelle déformation de rotation d'au moins une cloche.

Dans ce but, l'invention propose un ensemble de structure de caisse du type décrit précédemment, caractérisé en ce qu'il comporte au moins un élément extérieur et un élément intérieur de renfort qui sont agencés en arrière d'au moins une cloche pour prévenir les mouvements de déformation en rotation de la cloche lors de la compression de l'élément de structure de caisse et éviter la déformation du pied voisin.

Selon d'autres caractéristiques de l'invention :
- l'élément extérieur est agencé à l'extrémité transversale arrière extérieure de la cloche et l'élément intérieur est agencé sensiblement à l'extrémité transversale arrière intérieure de la cloche,
- l'élément intérieur est agencé sensiblement dans l'alignement longitudinal de l'élément de suspension porté par la cloche,
- l'élément extérieur est fixé sur la face extérieure de la paroi adjacente à la cloche,
- l'élément extérieur présente la forme d'un profilé de direction sensiblement longitudinale dont la section présente la forme d'un U de concavité tournée vers la paroi,
- l'élément extérieur est soudé sur la paroi,
- l'élément intérieur est fixé sous l'auvent horizontal à sa jonction avec le tablier,
- l'élément intérieur présente la forme d'un profilé de direction sensiblement longitudinale dont la section présente la forme d'un U, de concavité tournée vers l'auvent, et dont deux ailes latérales sensiblement horizontales sont soudées sous l'auvent,
- une arête transversale de l'auvent est soudée sur la cloche.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un ensemble de structure de caisse selon l'invention ;
- la figure 2 est une vue schématique de détail de l'ensemble de structure de caisse de la figure 1 avant sa déformation ; et
- la figure 3 est une vue schématique de détail de l'ensemble de structure de caisse de la figure 1 après sa déformation.

Dans la description qui va suivre, des chiffres de référence identiques désignent des pièces identiques ou ayant des fonctions similaires.

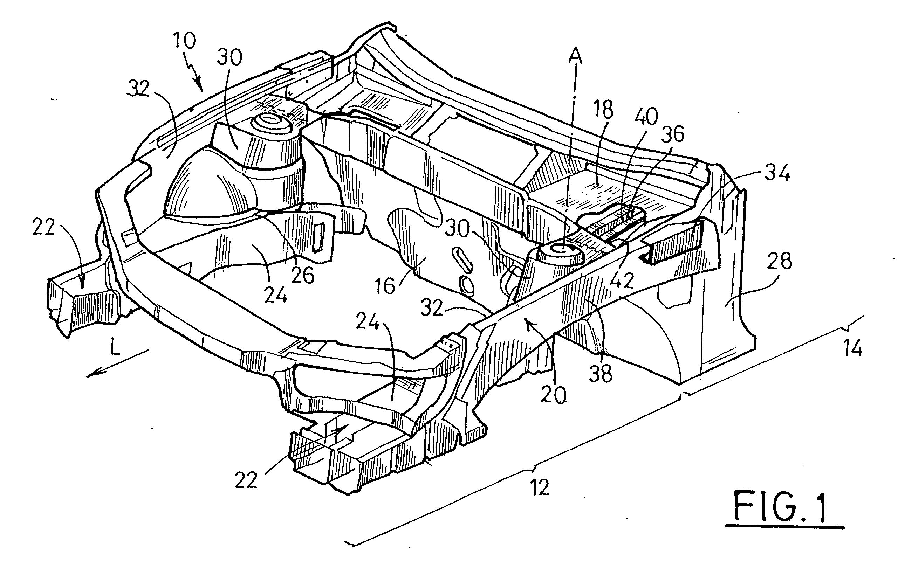

On a représenté à la figure 1 un ensemble 10 de structure de caisse d'un véhicule automobile réalisé conformément à l'invention.

De manière connue, l'ensemble 10 de structure de caisse comporte, d'avant en arrière, un élément 12 de structure de caisse, compressible longitudinalement en cas de choc, qui forme notamment support pour des organes mécaniques du véhicule (non représentés), et une cellule rigide 14, qui forme notamment habitacle du véhicule automobile. Un tablier 16 sensiblement vertical, qui se prolonge dans sa partie supérieure par un auvent 18 sensiblement horizontal qui s'étend à l'intérieur de la cellule 14, est interposé entre l'élément 12 de structure de caisse et la cellule 14. L'élément de structure 12 de caisse est délimité transversalement par des parois latérales verticales 20 qui sont notamment destinées à former support pour des ailes (non représentées) du véhicule.

L'élément 12 de structure de caisse comporte aussi deux longerons longitudinaux 22 qui s'étendent de part et d'autre de l'élément 12 et du compartiment moteur, et qui sont accolés aux parois latérales 20 de l'élément avant 12. L'ensemble 10 de structure de caisse comporte, en arrière et sensiblement à proximité immédiate du tablier 16, des pieds latéraux verticaux 28 qui sont agencés sensiblement dans le prolongement des parois 20 et qui sont destinés à porter des moyens d'articulation d'ouvrants du véhicule (non représentés).

L'élément 12 comporte aussi, en avant et sensiblement à proximité immédiate du tablier 16, des cloches 30 porteuses d'éléments de suspensions (non représentés) qui sont adjacentes aux faces intérieures 32 des parois 20.

Au moins une partie avant 24 des longerons 22 est jointive avec un coin avant 26 des cloches 30 porteuses des éléments de suspension.

Conformément à l'invention, l'ensemble 10 de structure de caisse comporte au moins un élément extérieur 34 et un élément intérieur 36 de renfort qui sont agencés en arrière d'au moins une cloche 30 pour prévenir les mouvements de déformation en rotation de la cloche 30 lors de la compression de l'élément 10 de structure de caisse, et notamment du longeron 22 associé.

Plus précisément, l'élément extérieur 34 est agencé à l'extrémité transversale arrière extérieure de la cloche 30 et, l'élément intérieur 36 est agencé sensiblement à l'extrémité transversale arrière intérieure de la cloche 30. Cette configuration permet, en fournissant un appui sur deux points espacés d'une grande largeur à l'arrière de la cloche, de prévenir ses éventuels mouvements de rotation lors du choc.

Plus précisément, l'élément intérieur est agencé sensiblement dans l'axe de l'élément de suspension (non représenté) d'axe A qui est porté par la cloche 30. Cette configuration permet de renforcer l'appui de la cloche 30 à l'endroit où risquent de s'exercer les efforts maximaux de déformation, puisque le matériau d'un élément de suspension est notoirement plus résistant à la déformation que le matériau de la cloche 30. Cette configuration permet aussi d'éviter une pénétration locale de l'élément de suspension à l'intérieur de la cellule 14.

L'élément extérieur 34 est fixé sur la face extérieure 38 de la paroi 20 adjacente à la cloche 30. Plus particulièrement, comme l'illustre la figure 1, l'élément extérieur 34 présente la forme d'un profilé de direction sensiblement longitudinale "L" dont la section présente la forme d'un U de concavité tournée vers la paroi 20. Avantageusement, et de manière non limitative de l'invention, l'élément extérieur 34 est soudé par point sur la paroi 20.

L'élément extérieur 34 peut aussi, de manière avantageuse, remplir d'autres fonctions, et notamment participer à l'accrochage d'une aile (non représentée) du véhicule.

L'élément intérieur 36, quand à lui, présente la forme d'un profilé de direction sensiblement longitudinale 'L" dont la section présente la forme d'un U, dont la concavité est tournée vers l'auvent 18. Deux ailes latérales 40 de l'élément intérieur 36, sensiblement horizontales, sont soudées sous l'auvent 18.

Enfin, avantageusement une arête transversale 42 de l'auvent 18 est soudée sur la cloche 30.

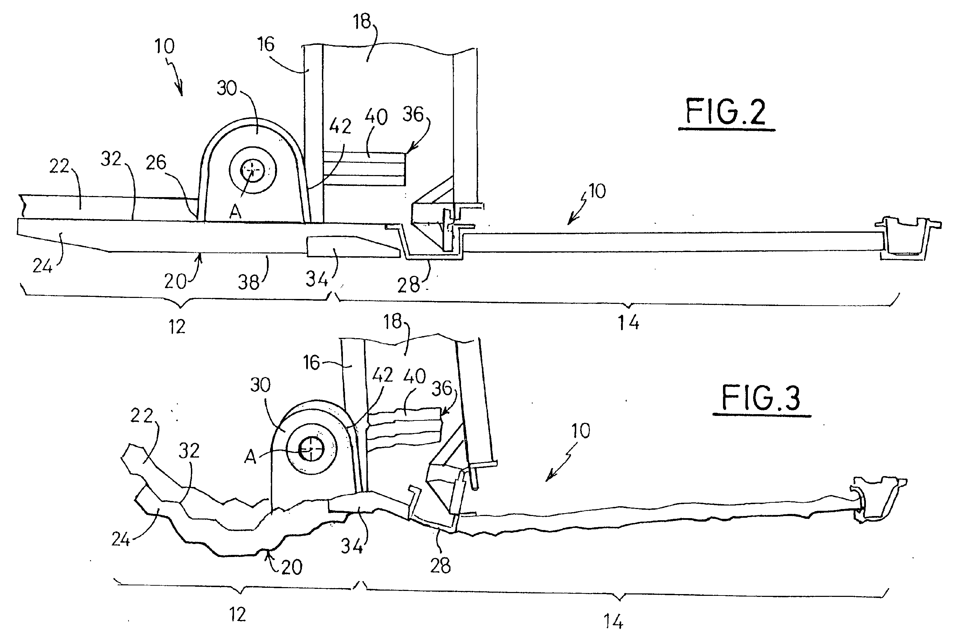

De la sorte, comme l'illustrent les figures 2 et 3, lorsque l'élément 12 se comprime lors d'un choc, les éléments extérieur 34 et intérieur 36 de renforts empêchent la rotation de la cloche 30. Cette configuration permet avantageusement d'éviter que le pied 28 latéral vertical d'articulation de l'ouvrant ne se déforme. De la sorte, l'ouvrant associé (non représenté) demeure dans l'alignement longitudinal de la carrosserie du véhicule et peut s'opposer aux efforts de compression de l'élément avant 12, ce qui permet d'accroître la rigidité de la cellule 14.

L'invention propose donc un agencement d'un ensemble de structure de caisse présentant des caractéristiques élevées de sécurité.

## Revendications

1. Ensemble (10) de structure de caisse de véhicule automobile, du type qui comporte, d'avant en arrière, un élément (12) de structure de caisse, compressible longitudinalement en cas de choc, qui forme notamment support pour des organes mécaniques du véhicule, et une cellule (14) rigide, qui forme notamment habitacle du véhicule automobile, du type dans lequel un tablier (16) sensiblement vertical qui se prolonge dans sa partie supérieure par un auvent (18) sensiblement horizontal, est interposé entre l'élément (12) de structure de caisse et la cellule (14), du type dans lequel l'élément (12) de structure de caisse est délimité transversalement par des parois (20) latérales verticales formant support pour des ailes du véhicule, et du type dans lequel l'ensemble (10) de structure de caisse comporte, en arrière et sensiblement à proximité immédiate du tablier (16), des pieds (28) latéraux verticaux d'articulation d'ouvrants qui sont agencés dans le prolongement des parois (20), et, en avant et sensiblement à proximité immédiate du tablier (16), des cloches (30) porteuses d'éléments de suspensions qui sont adjacentes aux faces intérieures (32) des parois (20),
**caractérisé en ce qu'**il comporte au moins un élément extérieur (34) et un élément intérieur (36) de renfort agencé à l'intérieur de la cellule (14), qui sont agencés en arrière d'au moins une cloche (30) pour prévenir les mouvements de déformation en rotation de la cloche (30) lors de la compression de l'élément (12) de structure de caisse et éviter la déformation du pied (28) voisin.

2. Ensemble (10) selon la revendication précédente, **caractérisé en ce que** l'élément extérieur (34) est agencé à l'extrémité transversale arrière extérieure de la cloche (30) et l'élément intérieur (36) est agencé sensiblement à l'extrémité transversale arrière intérieure de la cloche (30).

3. Ensemble (10) selon l'une des revendications précédentes, **caractérisé en ce que** l'élément intérieur (36) est agencé sensiblement dans l'alignement longitudinal de l'élément de suspension porté par la cloche (30).

4. Ensemble (10) selon l'une des revendications 2 ou 3, **caractérisé en ce que** l'élément extérieur (34) est fixé sur la face extérieure (38) de la paroi (20) adjacente à la cloche (30).

5. Ensemble selon la revendication précédente, **caractérisé en ce que** l'élément extérieur (34) présente la forme d'un profilé de direction (L) sensiblement longitudinale dont la section présente la forme d'un U de concavité tournée vers la paroi (20).

6. Ensemble (10) selon l'une quelconque des revendications 2 à 5, **caractérisé en ce que** l'élément extérieur (34) est soudé sur la paroi (20).

7. Ensemble (10) selon la revendication précédente, **caractérisé en ce que** l'élément intérieur (36) est fixé sous l'auvent (18) horizontal à sa jonction avec le tablier (20).

8. Ensemble (10) selon la revendication précédente, **caractérisé en ce que** l'élément intérieur (36) présente la forme d'un profilé de direction sensiblement longitudinale dont la section présente la forme d'un U, de concavité tournée vers l'auvent, et dont deux ailes latérales (40) sensiblement horizontales sont soudées sous l'auvent (18).

9. Ensemble (10) selon l'une quelconque des revendications précédentes, **caractérisé en ce qu'**une arête transversale (42) de l'auvent (18) est soudée sur la cloche (30).

## Claims

1. Motor vehicle body shell structure assembly (10) of the type that comprises, from front to rear, a body shell structure element (12), that can be compressed longitudinally in the event of impact, that forms in particular a support for mechanical members of the vehicle, and a rigid cell (14) that forms in particular the passenger compartment of the motor vehicle, of the type in which a substantially vertical bulkhead (16) which extends in its top portion via a substantially horizontal cowl (18) is interposed between the body shell structure element (12) and the cell (14), of the type in which the body shell structure element (12) is delimited transversely by vertical side walls (20) forming a support for wings of the vehicle, and of the type in which the body shell structure assembly (10) comprises, behind and substantially immediately adjacent to the bulkhead (16), vertical side legs (28) for articulation of openings that are arranged in the extension of the walls (20), and, in front of and substantially immediately adjacent to the bulkhead (16), bell housings (30) supporting suspension elements that are adjacent to the inner faces (32) of the walls (20),
**characterized in that** it comprises at least one outer reinforcement element (34) and one inner reinforcement element (36) arranged inside the cell (14) that are arranged behind at least one bell housing (30) to prevent rotational deformation movements of the bell housing (30) when the body shell structure element (12) is compressed and prevent the deformation of the adjacent leg (28).

2. Assembly (10) according to the preceding claim, **characterized in that** the outer element (34) is arranged at the outer rear transverse end of the bell housing (30) and the inner element (36) is arranged substantially at the inner rear transverse end of the bell housing (30).

3. Assembly (10) according to one of the preceding claims, **characterized in that** the inner element (36) is arranged substantially in the longitudinal alignment of the suspension element supported by the bell housing (30).

4. Assembly (10) according to one of Claims 2 or 3, **characterized in that** the outer element (34) is attached to the outer face (38) of the wall (20) adjacent to the bell housing (30).

5. Assembly according to the preceding claim, **characterized in that** the outer element (34) has the shape of a section of substantially longitudinal direction (L) whose cross section is U-shaped with its concavity turned towards the wall (20).

6. Assembly (10) according to any one of Claims 2 to 5, **characterized in that** the outer element (34) is welded to the wall (20).

7. Assembly (10) according to the preceding claim, **characterized in that** the inner element (36) is attached beneath the horizontal cowl (18) at its junction with the bulkhead (20).

8. Assembly (10) according to the preceding claim, **characterized in that** the inner element (36) has the shape of a section of substantially longitudinal direction whose cross section is U-shaped, with its concavity turned towards the cowl, and whose two substantially horizontal side flanges (40) are welded beneath the cowl (18).

9. Assembly (10) according to any one of the preceding claims, **characterized in that** a transverse ridge (42) of the cowl (18) is welded to the bell housing (30).

## Patentansprüche

1. Kraftfahrzeugaufbaustrukturanordnung (10) der Art, die von vorne nach hinten ein Aufbaustrukturelement (12), das bei einem Aufprall in Längsrichtung zusammendrückbar ist und besonders die Stütze für mechanische Organe des Fahrzeugs bildet, und eine starre Zelle (14) aufweist, die besonders den Fahrgastraum des Kraftfahrzeugs bildet, der Art, bei der eine im Wesentlichen vertikale Spritzwand (16), die sich in ihrem oberen Teil durch einen im Wesentlichen horizontalen Windlauf (18) verlängert, zwischen dem Aufbaustrukturelement (12) und der Zelle (14) liegt, der Art, bei der das Aufbaustrukturelement (12) quer durch vertikale Seitenwände (20) begrenzt ist, die die Stütze für Schutzbleche des Fahrzeugs bilden, und der Art, bei der die Aufbaustrukturanordnung (10) hinten und im Wesentlichen in unmittelbarer Nähe der Spritzwand (16) seitliche vertikale Flügelgelenkfüße (28), die in der Verlängerung der Wände (20) angeordnet sind, und vorne und im Wesentlichen in unmittelbarer Nähe der Spritzwand (16) glockenförmige Federungselementaufnahmen (30) aufweist, die den Innenflächen (32) der Wände (20) benachbart sind,
**dadurch gekennzeichnet, dass** sie mindestens ein äußeres Element (34) und ein im Inneren der Zelle (14) angeordnetes inneres Verstärkungselement (36) aufweist, die hinter mindestens einer glockenförmigen Aufnahme (30) angeordnet sind, um beim Zusammendrücken des Aufbaustrukturelements (12) Deformationsdrehbewegungen der glockenförmigen Aufnahme (30) zu verhindern und die Deformation des benachbarten Fußes (28) zu vermeiden.

2. Anordnung (10) nach dem vorhergehenden Anspruch, **dadurch gekennzeichnet, dass** das äußere Element (34) am hinteren äußeren Querende der glockenförmigen Aufnahme (30) und das innere Element (36) im Wesentlichen am hinteren inneren Querende der glockenförmigen Aufnahme (30) angeordnet ist.

3. Anordnung (10) nach einem der vorhergehenden Ansprüche, **dadurch gekennzeichnet, dass** das innere Element (36) im Wesentlichen in der Längsflucht des in der glockenförmigen Aufnahme (30) aufgenommenen Federungselements angeordnet ist.

4. Anordnung (10) nach Anspruch 2 oder 3, **dadurch gekennzeichnet, dass** das äußere Element (34) auf der Außenfläche (38) der Wand (20) neben der glockenförmigen Aufnahme (30) befestigt ist.

5. Anordnung nach dem vorhergehenden Anspruch, **dadurch gekennzeichnet, dass** das äußere Element (34) die Form eines Profils mit im Wesentlichen länglicher Richtung (L) hat, das im Querschnitt U-förmig ist, wobei die Höhlung des U zur Wand (20) hinweist.

6. Anordnung (10) nach einem der Ansprüche 2 bis 5, **dadurch gekennzeichnet, dass** das äußere Element (34) an die Wand (20) geschweißt ist.

7. Anordnung (10) nach dem vorhergehenden Anspruch, **dadurch gekennzeichnet, dass** das innere Element (36) unter dem horizontalen Windlauf (18) an seiner Verbindungsstelle zur Spritzwand (16) befestigt ist.

8. Anordnung (10) nach dem vorhergehenden Anspruch, **dadurch gekennzeichnet, dass** das innere Element (36) die Form eines Profils mit im Wesentlichen länglicher Richtung hat, das im Querschnitt U-förmig ist, wobei die Höhlung des U zum Windlauf hinweist und seine beiden im Wesentlichen horizontalen Seitenflügel (40) unter dem Windlauf (18) verschweißt sind.

9. Anordnung (10) nach einem der vorhergehenden Ansprüche, **dadurch gekennzeichnet, dass** ein Quersteg (42) des Windlaufs (18) auf der glockenförmigen Aufnahme (30) verschweißt ist.
